(19) **Europäisches Patentamt / European Patent Office / Office européen des brevets**

(11) **EP 4 568 246 A1**

(12) **EUROPEAN PATENT APPLICATION**
published in accordance with Art. 153(4) EPC

(43) Date of publication:
**11.06.2025 Bulletin 2025/24**

(21) Application number: **23920883.8**

(22) Date of filing: **12.12.2023**

(51) International Patent Classification (IPC):
***H04N 19/42*** *(2014.01)*

(86) International application number:
**PCT/CN2023/138206**

(87) International publication number:
**WO 2024/164694 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.02.2023 CN 202310136843**

(71) Applicant: **Tencent Technology (Shenzhen) Company Limited**
**Shenzhen, Guangdong 518057 (CN)**

(72) Inventors:
- **LV, Yue**
  **Shenzhen, Guangdong 518057 (CN)**
- **XIANG, Jinxi**
  **Shenzhen, Guangdong 518057 (CN)**
- **ZHANG, Jun**
  **Shenzhen, Guangdong 518057 (CN)**
- **HAN, Xiao**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **IMAGE COMPRESSION METHOD AND APPARATUS, ELECTRONIC DEVICE, COMPUTER PROGRAM PRODUCT, AND STORAGE MEDIUM**

(57) The present invention provides an image compression method and apparatus, an electronic device, a computer program product, and a storage medium. The method comprises: encoding an image of interest to give a first hidden variable corresponding to the image of interest; determining a hyperprior probability estimate corresponding to the first hidden variable; performing a partial decoding on the first hidden variable according to the hyperprior probability estimate to give a partial decoding result of the first hidden variable; and determining a compressed image corresponding to the image of interest on the basis of the partial decoding result of the first hidden variable and the first hidden variable corresponding to the image of interest, wherein the data volume of the compressed image is smaller than that of the image of interest.

Encode a to-be-compressed image, to obtain a first latent code corresponding to the to-be-compressed image — 3001

Determine a hyper prior probability estimation value corresponding to the first latent code — 3002

Partially decode the first latent code using the hyper prior probability estimation value, to obtain a partial decoding result of the first latent code — 3003

Generate a compressed image corresponding to the to-be-compressed image using the partial decoding result of the first latent code and the first latent code corresponding to the to-be-compressed image — 3004

**FIG. 3A**

EP 4 568 246 A1

**Description**

RELATED APPLICATION

This application claims priority to Chinese Patent Application No. 2023101368433, filed on February 9, 2023, which is incorporated by reference in its entirety.

FIELD OF THE TECHNOLOGY

The present disclosure relates to computer technologies, and in particular, to a method and an apparatus for image compression, an electronic device, a computer program product, and a computer storage medium.

BACKGROUND OF THE DISCLOSURE

In the related art, a deep neural network obtains very good performance in many computer vision tasks. However, when an image is compressed by using a neural network model, a basic convolutional network is used in the related art to transform the image. When a compression rate is low, a latent code needs to be restored from a byte stream to reconstruct a high-quality image, but a capability of an image nonlinear transformation network limits a capability of the network to reconstruct the high-quality image. In addition, a context model in the related art uses PixelCNN for serial decoding, making the image compression less efficient.

SUMMARY

In view of this, embodiments of the present disclosure provide a method and an apparatus for image compression, an electronic device, a computer program product, and a computer storage medium, which can improve efficiency of image compression by using an image processing model, reduce a volume of a compressed image, and reduce storage costs of the image.

Technical solutions of the embodiments of the present disclosure are implemented as follows:

An embodiment of the present disclosure provides an image compression method. The method includes:

encoding a to-be-compressed image, to obtain a first latent code corresponding to the to-be-compressed image;

determining a hyper prior probability estimation value corresponding to the first latent code;

partially decoding the first latent code using the hyper prior probability estimation value, to obtain a partial decoding result of the first latent code; and

generating a compressed image corresponding to the to-be-compressed image based on the partial decoding result of the first latent code and the first latent code corresponding to the to-be-compressed image, a data volume of the compressed image being less than a data volume of the to-be-compressed image.

An embodiment of the present disclosure further provides an image compression apparatus. The apparatus includes:

an encoding module, configured to encode a to-be-compressed image, to obtain a first latent code corresponding to the to-be-compressed image; and

an information processing module, configured to determine a hyper prior probability estimation value corresponding to the first latent code;

the information processing module being further configured to partially decode the first latent code according to the hyper prior probability estimation value, to obtain a partial decoding result of the first latent code; and

the information processing module being further configured to generate a compressed image corresponding to the to-be-compressed image based on the partial decoding result of the first latent code and the first latent code corresponding to the to-be-compressed image, a data volume of the compressed image being less than a data volume of the to-be-compressed image.

An embodiment of the present disclosure further provides an electronic device. The electronic device includes:

a memory, configured to store executable instructions; and

a processor, configured to implement the foregoing image compression method when running the executable instructions stored in the memory.

An embodiment of the present disclosure further provides a computer program product. When the computer program or instructions are executed by a processor, the foregoing image compression method is implemented.

An embodiment of the present disclosure further provides a computer-readable storage medium, having executable instructions stored therein. The executable instructions, when executed by a processor, implement the foregoing image compression method.

The embodiments of the present disclosure have the following beneficial effects:

In the embodiments of the present disclosure, a to-be-compressed image is encoded to obtain a first latent code, and a hyper prior probability estimation value is determined according to the first latent code. If the first latent code obtained through encoding follows an inherent prior probability, the obtained hyper prior probability estimation value may be used as a reference for subsequent partial decoding, so that accuracy of a decoding result obtained through decoding is higher. In addition, performance of image compression is improved, so that a volume of a compressed image obtained through decoding is reduced, and storage costs of the image are reduced. The first latent code is partially decoded according to the hyper prior probability estimation value, to obtain a partial decoding result. The first latent code is partially decoded, that is, some pixels are decoded, so that when other pixels are decoded subsequently, prediction (decoding) can be performed based on the partial decoding result. In this way, time consumed for compressing the image is reduced, and compression efficiency is improved.

BRIEF DESCRIPTION OF THE DRAWINGS

FIG. 1 is a schematic diagram of a use environment of an image compression method according to an embodiment of the present disclosure.

FIG. 2 is a schematic diagram of a composition structure of an electronic device according to an embodiment of the present disclosure.

FIG. 3A is a schematic flowchart 1 of an image compression method according to an embodiment of the present disclosure.

FIG. 3B is a schematic flowchart 2 of an image compression method according to an embodiment of the present disclosure.

FIG. 4 is a schematic diagram of data flow of an image processing model according to an embodiment of the present disclosure.

FIG. 5 is a schematic diagram of a model structure of an image processing model according to an embodiment of the present disclosure.

FIG. 6 is a schematic diagram of a working process of a space-to-depth conversion layer and a depth-to-space conversion layer according to an embodiment of the present disclosure.

FIG. 7 is a schematic diagram of a composition structure of a shifted window attention mechanism module according to an embodiment of the present disclosure.

FIG. 8 is a schematic diagram of a calculation principle of a shifted window attention mechanism module according to an embodiment of the present disclosure.

FIG. 9 is a schematic diagram of auto regression of a context network according to an embodiment of the present disclosure.

FIG. 10 is a schematic flowchart of a method for training an image processing model according to an embodiment of the present disclosure.

FIG. 11 is a schematic diagram of effect testing of an image processing model according to an embodiment of the present disclosure.

DESCRIPTION OF EMBODIMENTS

To make the objectives, technical solutions, and advantages of the present disclosure clearer, the following describes the present disclosure in detail with reference to the accompanying drawings. The described embodiments are not to be considered as a limitation to the present disclosure. All other embodiments obtained by a person of ordinary skill in the art without creative efforts fall within the protection scope of the present disclosure.

In the following descriptions, related "some embodiments" describe a subset of all possible embodiments. However, the "some embodiments" may be the same subset or different subsets of all the possible embodiments, and may be combined with each other without conflict.

Before the embodiments of the present disclosure are described in detail, nouns and terms provided in the embodiments of the present disclosure are described. The nouns and terms provided in the embodiments of the present disclosure are applicable to the following explanations.

(1) Wasserstein distance: A wasserstein distance is a distance measurement function mainly configured for measuring a difference between two distributions.

(2) Artificial neural network: An artificial neural network is referred to as NN for short. In the field of machine learning and cognitive science, it is a mathematical model or a computational model that imitates a structure and a function of a biological neural network, and is configured to estimate or approximate a function.

(3) Model parameter: A model parameter is a quantity that uses a general variable to establish a relationship between a function and a variable. In an artificial neural network, the model parameter is generally a real-number matrix.

(4) Model training: Model training is to perform multi-classification learning on image data sets. The model may be constructed by using a deep learning framework such as Tensor Flow and torch, and a multi-image classification model is formed by combining a plurality of layers of neural network layers such as CNN. An input of the model is a three-channel matrix or an original channel matrix formed by reading the image by a tool such as openCV. An output of the model is a multi-classification probability, and an image compression result is finally outputted by using an algorithm such as softmax. During training, the model is approximated to a correct trend through an objective function such as cross-entropy.

(5) Variational auto encoder (VAE): A VAE is a common network architecture in image compression, and performs image transformation on an inputted high-dimensional image to generate a low-dimensional latent code. The latent code follows an inherent prior probability, and the input image follows a conditional probability conditional on the latent code. In this case, a low-dimensional code may describe information included in the input image, and a high-dimensional input image may be reconstructed through sampling. During image compression, the VAE compresses the low-dimensional latent code to reduce information redundancy.

(6) Hyper prior: Based on a latent code obtained through an encoder in an input image, the hyper prior uses a lightweight network to perform entropy model modeling on each point in the latent code, and an occurrence of a feature point is obtained through an entropy model of a feature value for bit rate estimation and entropy encoding. The hyper prior uses a small quantity of bytes to model a probability of the latent code for storage. During decoding, a byte stream stored by a hyper prior module is preferentially decoded, and then the latent code is restored by using a probability decoded from the byte stream to reconstruct the image.

(7) Context model: A context model generally uses decoded pixel information to predict undecoded pixel information in an autoregressive manner, to reduce information redundancy. A commonly used autoregressive model uses sliding-window linear serial prediction, with complexity increasing exponentially with a dimension of input data. Although the autoregressive context model can greatly improve performance of the model, computational complexity of a compression model also greatly increases accordingly.

(8) Entropy encoding: Entropy encoding is lossless encoding in which no information is lost according to an entropy principle in an encoding process, and is also a key module in lossy encoding, at the end of an encoder. Information entropy is an average information amount (a measure of uncertainty) of a source. Common entropy encoding includes: Shannon coding, Huffman coding, Exp-Golomb coding, and arithmetic coding. The entropy encoding is performed on a symbol that needs to be encoded and that is obtained by an encoder through a series of operations such as quantization, transformation, motion, and prediction, and an appropriate entropy encoding model is selected based on distribution of an encoding symbol. Therefore, the entropy encoding is an independent unit, and may be applied to video encoding and decoding, but is also applicable to other encoders such as image encoding and point cloud encoding.

Before an image compression method provided in the embodiments of the present disclosure is described, defects of the image compression method in the related art are first described. In the related art, in an image encoding method, it is necessary to manually set an image feature, such as JPEG, BPG, and VVC-intra, which use orthogonal linear transforms such as discrete cosine transform (DCT) and discrete wavelet transform (DWT) to decorrelate an image pixel before quantization and encoding. The JPEG compression is based on the premise that human eyes are sensitive to color and more sensitive to brightness to separately compress Y, Cb, and Cr. For example, for a natural picture, the JPEG performs DCT decomposition on each 8*8 patch of the natural picture to obtain 64 DCT parameters. According to an energy aggregation principle, more important parameters are substantially concentrated in a low-frequency region. Therefore, the picture can be restored to an acceptable quality range without all parameters. After the DCT parameters are quantized, variable length coding and Huffman coding may be used to compress redundancy. However, when a compression rate is low, the latent code needs to be restored from the byte stream to reconstruct a high-quality image, but a capability of an image nonlinear transformation network limits a capability of the network to reconstruct the high-quality image. In addition, the context model in the related art uses PixelCNN for serial decoding, which is less efficient in decoding.

Based on this, the embodiments of the present disclosure provide an image compression method. An image processing model including an image transformation network, a hyper prior network, and a context network is used to compress an image, thereby improving the compression efficiency and improving the quality of a compressed image.

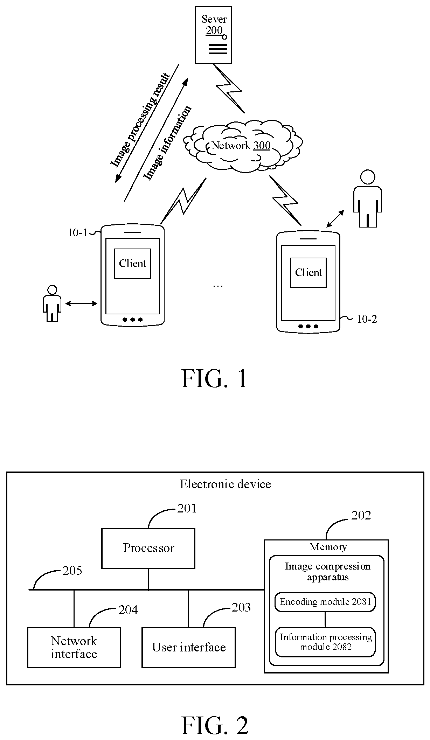

FIG. 1 is a schematic diagram of a use scenario of an image compression method according to an embodiment of the present disclosure. Referring to FIG. 1, a terminal (including a terminal 10-1 and a terminal 10-2) is provided with a client having an image processing function or a client having a video processing function. A user may input a corresponding to-be-processed image through the provided image processing client, and the image processing client may also receive a corresponding compressed image and display the received compressed image to the user. The video processing client may compress each frame of image in a video by using the image processing model provided in the embodiments of the present disclosure, to reduce a storage space of a server occupied by the video. The terminal is connected to a server 200 through a network 300. The network 300 may be a wide area network, a local area network, or a combination thereof, and data transmission is implemented by using a wireless link.

For example, the server 200 is configured to deploy the image processing model and train the image processing model, to determine network parameters of the image transformation network, the hyper prior network, and the context network in the image processing model. In addition, after training of the image processing model is completed, the terminal (the terminal 10-1 and/or the terminal 10-2) displays the compressed image that is generated by the image processing model and that corresponds to the to-be-processed image.

Definitely, before the image processing model compresses the to-be-processed image, the image processing model further needs to be trained, to determine the network parameters of the image transformation network, the hyper prior network, and the context network.

A structure of an electronic device for implementing the image compression method provided in the embodiments of the present disclosure is described in detail below. The electronic device may be implemented in various forms, for example, a dedicated terminal having an image compression function, or may be a server having an image compression function, for example, the server 200 in FIG. 1. FIG. 2 is a schematic diagram of a composition structure of an electronic device according to an embodiment of the present disclosure. FIG. 2 shows only an exemplary structure rather than the entire structure of the electronic device, and a part or all of the structure shown in FIG. 2 may be implemented according to requirements.

The electronic device provided in this embodiment of the present disclosure includes: at least one processor 201, a memory 202, a user interface 203, and at least one network interface 204. Components in the electronic device 20 are coupled together through a bus system 205. The bus system 205 is configured to implement connection and communication between these components. In addition to a data bus, the bus system 205 further includes a power bus, a control bus, and a status signal bus. However, for ease of clear description, all types of buses in FIG. 2 are marked as the bus system 205.

The user interface 203 may include a display, a keyboard, a mouse, a trackball, a click wheel, a key, a button, a touchpad, or a touchscreen.

The memory 202 may be a volatile memory or a non-volatile memory, or may include both a volatile memory and a non-volatile memory. The memory 202 in this embodiment of the present disclosure can store data to support operations of the terminal (such as 10-1). Examples of the data include any computer program, such as an operating system and an application program, configured for operating on the terminal (such as 10-1). The operating system includes various system programs, for example, a framework layer, a core library layer, and a drive layer, configured for implementing various basic services and processing hardware-based tasks. The application program may include various application programs.

In some embodiments, an image compression apparatus provided in the embodiments of the present disclosure may be implemented in a combination of software and hardware. For example, the image compression apparatus provided in the embodiments of the present disclosure may be a processor in a form of a hardware decoding processor, and is programmed to perform the image compression method provided in the embodiments of the present disclosure. For example, the processor in the form of a hardware decoding processor may use one or more application specific integrated circuits (ASICs), a DSP, a programmable logic device (PLD), a complex programmable logic device (CPLD), a field-programmable gate array (FPGA), or another electronic element.

In an example in which the image compression apparatus provided in the embodiments of the present disclosure is implemented by using a combination of software and hardware, the image compression apparatus provided in the embodiments of the present disclosure may be directly implemented as a combination of software modules executed by the processor 201. The software modules may be located in a storage medium. The storage medium is located in the memory 202. The processor 201 reads executable instructions included in the software modules in the memory 202, and completes the image compression method provided in the embodiments of the present disclosure in combination with necessary hardware (for example, including the processor 201 and other components connected to the bus system 205).

For example, the processor 201 may be an integrated circuit chip, and has a signal processing capability, for example, a general purpose processor, a digital signal processor (DSP), or another programmable logical device, a discrete gate or a transistor logical device, or a discrete hardware component. The general purpose processor may be a microprocessor, any conventional processor, or the like.

In an example in which the image compression apparatus provided in the embodiments of the present disclosure is implemented by using hardware, the apparatus provided in the embodiments of the present disclosure may be directly executed and completed by using the processor 201 in the form of the hardware decoding processor, for example, executed by using one or more application specific integrated circuits (ASICs), a DSP, a programmable logic device (PLD), a complex programmable logic device (CPLD), a field-programmable gate array (FPGA), or another electronic element to implement the image compression method provided in the embodiments of the present disclosure.

The memory 202 in the embodiments of the present disclosure is configured to store various types of data to support operations of the electronic device 20. Examples of the data include: any executable instruction for operating on the electronic device 20, such as an executable instruction. A program for implementing the image compression method in the embodiments of the present disclosure may be included in the executable instruction.

In some other embodiments, the image compression apparatus provided in this embodiment of the present disclosure may be implemented in a software manner. FIG. 2 shows the image compression apparatus stored in the memory 202. The image compression apparatus may be software in a form such as a program or a plug-in, and includes a series of modules. As an example of the program stored in the memory 202, the image compression apparatus includes the following software modules: an encoding module 2081 and an information processing module 2082.

When the software modules in the image compression apparatus are read into a random access memory (RAM) and executed by the processor 201, the image compression method provided in the embodiments of the present disclosure is implemented. The following describes functions of the software modules in the image compression apparatus in the embodiments of the present disclosure.

The encoding module 2081 is configured to encode a to-be-compressed image, to obtain a first latent code corresponding to the to-be-compressed image; and

the information processing module 2082 is configured to determine a hyper prior probability estimation value corresponding to the first latent code;

the information processing module 2082 being configured to partially decode the first latent code according to the hyper prior probability estimation value, to obtain a partial decoding result of the first latent code; and

the information processing module 2082 being further configured to generate a compressed image corresponding to the to-be-compressed image based on the partial decoding result of the first latent code and the first latent code corresponding to the to-be-compressed image, a data volume of the compressed image being less than a data volume of the to-be-compressed image.

In some embodiments, the information processing module 2082 is further configured to perform auto regression on a second latent code according to the partial decoding result, to obtain a mean and a variance of the second latent code; and

the information processing module 2082 is further configured to decode the second latent code by using the mean and the variance, to obtain the compressed image.

In some embodiments, the information processing module 2082 is configured to encode the first latent code, to obtain a third latent code;

the information processing module 2082 is configured to perform entropy encoding on the third latent code, to obtain an entropy code of the third latent code;

the information processing module 2082 is configured to decode the entropy code of the third latent code, to obtain a fourth latent code; and

the information processing module 2082 is configured to decode the fourth latent code, to obtain the hyper prior probability estimation value.

In some embodiments, the information processing module 2082 is configured to group the second latent code, to obtain at least two groups of latent sub-codes;

the information processing module 2082 is configured to perform spatial auto regression on each group of latent sub-codes through a checkerboard grid; and

the information processing module 2082 is configured to predict an undecoded channel group through the partial decoding result when spatial auto regression is completed for each group of latent sub-codes, until auto regression is completely completed for the second latent code, to obtain the mean and the variance of the second latent code.

In some embodiments, the information processing module 2082 is further configured to decode the second latent code by using the mean and the variance to obtain a decoding result of the second latent code; and

the information processing module 2082 is configured to alternately perform splitting and attention mechanism shifting on the decoding result of the second latent code until the decoding result of the second latent code is completely split, to obtain the compressed image.

In some embodiments, the information processing module 2082 is further configured to encode the to-be-compressed image through an image transformation network of an image processing model, to obtain the first latent code;

determine the hyper prior probability estimation value according to the first latent code through a hyper prior network;

partially decode the first latent code through a context network according to the hyper prior probability estimation value, to obtain the partial decoding result;

perform auto regression on the second latent code according to the partial decoding result through the context network, to obtain the mean and the variance of the second latent code; and

decode the second latent code by using the mean and the variance through the image transformation network, to obtain the compressed image.

In some embodiments, the information processing module 2082 is further configured to obtain a first training sample set corresponding to the image processing model, where the first training sample set includes at least one group of noise-free training samples;

the information processing module 2082 is further configured to configure random noise for the first training sample set, to obtain a second training sample set;

the information processing module 2082 is further configured to obtain an initial parameter of the image processing model; and

the information processing module 2082 is further configured to train the image processing model through the first training sample set and the second training sample set based on the initial parameter of the image processing model and a loss function of the image processing model, to determine an image transformation network parameter, a hyper prior network parameter, and a context network parameter of the image processing model.

In some embodiments, the information processing module 2082 is configured to determine, when a use environment of the image processing model is video image compression, a dynamic noise amount threshold matching the use environment of the image processing model; and

configure a dynamic amount of random noise for the first training sample set according to the dynamic noise amount threshold, to obtain the second training sample set matching the dynamic noise amount threshold.

In some embodiments, the information processing module 2082 is configured to determine, when a use environment of the image processing model is medical image compression, a fixed noise amount threshold matching the use environment of the image processing model; and

configure a fixed amount of random noise for the first training sample set according to the fixed noise amount threshold, to obtain the second training sample set matching the fixed noise amount threshold.

In some embodiments, the information processing module 2082 is configured to obtain a pixel difference between the compressed image and the to-be-compressed image; obtain a quantity of bytes for storing the second latent code and a fourth latent code in the image processing model; and determine a fused loss function of the image processing model according to the pixel difference and the quantity of bytes.

An embodiment of the present disclosure further provides a computer program product or a computer program. The computer program product or the computer program includes computer-executable instructions. The computer-executable instructions are stored in a computer-readable storage medium. A processor of a computer device or an electronic device reads the computer-executable instructions from the computer-readable storage medium, and the processor executes the computer-executable instructions, so that the computer device performs different embodiments and a combination of embodiments provided in the foregoing image compression method.

After being trained, the image processing model may be deployed in a server or a cloud server network. The image compression apparatus provided in the present disclosure may also be deployed in the electronic device shown in FIG. 2, to perform the image compression method provided in the embodiments of the present disclosure.

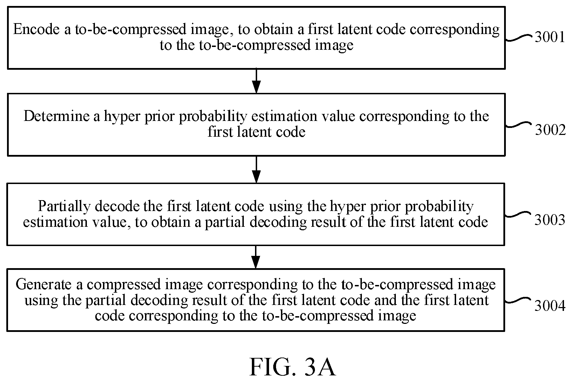

The image compression method provided in the embodiments of the present disclosure is described with reference to the electronic device 20 shown in FIG. 2. FIG. 3A is a schematic flowchart of an image compression method according to an embodiment of the present disclosure. The method includes the following operations.

At 3001: Encode a to-be-compressed image, to obtain a first latent code corresponding to the to-be-compressed image.

The to-be-compressed image may be a natural image. In actual application, an image transformation network may encode the to-be-compressed image for image encoding, for example, through a VAE, to obtain the first latent code corresponding to the to-be-compressed image. The first latent code refers to a random variable that exists in a model but cannot be directly observed, and is configured for representing a latent feature of input data. During actual implementation, the first latent code may be an output of a hidden layer of the image transformation network (that is, an intermediate layer between an input layer and an output layer of the image transformation network).

The image transformation network may be a neural network model for encoding the to-be-compressed image, and includes the input layer, at least one hidden layer, and the output layer. The to-be-compressed image is encoded through the image transformation network to obtain the first latent code corresponding to the to-be-compressed image.

Using an application scenario of an electronic game as an example, due to a large quantity of game images, to compress the images, compression processing is generally performed by 4 times in batches on high-definition pictures in the electronic game. For example, if a resolution of an original game image is 1024* 1024, after the 4 times of compression processing is performed, a low-resolution game image with a resolution of 256*256 is formed. However, through the image compression method of the present disclosure, an image resource can be converted in batches into a compressed image suitable for running of a graphics processing unit (GPU) of a terminal, thereby reducing memory overheads on a terminal side and network overheads during image transmission. For example, compression processing is performed by 8 times on an original game image with a resolution of 1024* 1024, so that a compressed image obtained through decoding has a smaller volume, and storage costs of the image are reduced.

At 3002: Determine a hyper prior probability estimation value corresponding to the first latent code.

In some embodiments, the hyper prior probability estimation value is a value obtained by encoding, quantizing, and decoding the first latent code in sequence. Specifically, it includes the following operations: encoding the first latent code to obtain an encoding result, quantizing the encoding result to obtain a quantization result, and then decoding the quantization result to obtain the hyper prior probability estimation value.

The encoding of the first latent code may be implemented through a hyper prior encoder, and the decoding of the quantization result may be implemented through a hyper prior decoder. The hyper prior encoder and the hyper prior decoder may be included in a Transformer model. In this way, if the first latent code obtained through encoding follows an inherent prior probability, the obtained hyper prior probability estimation value may be used as a reference for subsequent partial decoding, so that the accuracy of the decoding result obtained through decoding is higher.

The hyper prior probability estimation may be a process of estimating a parameter of a prior distribution. The parameter of the prior distribution depends on a form of the prior distribution. For example, when the form of the prior distribution is a normal distribution, the corresponding parameter of the prior distribution may be a mean and a variance. That is, when a prior distribution of the first latent code is a normal distribution, a corresponding parameter of the prior distribution may be a mean and a variance. The hyper prior probability estimation value is a value obtained by estimating the parameter of the prior distribution.

At 3003: Partially decode the first latent code according to the hyper prior probability estimation value, to obtain a partial decoding result of the first latent code.

Herein, partially decoding the first latent code refers to decoding a part of the first latent code. In actual application, the first latent code is partially decoded by using the hyper prior probability estimation value as reference information for decoding, that is, a part of the first code, namely some pixels are decoded, so that when other pixels are decoded subsequently, prediction (decoding) can be performed based on the partial decoding result.

For example, the first latent code is grouped in a channel dimension to obtain a plurality of channel latent code groups corresponding to the channel dimension. Then, some of channel latent code groups (for example, one channel latent code group) of the plurality of obtained channel latent code groups may be decoded by using auto regression (for example, checkerboard auto regression) to obtain the partial decoding result of the first latent code, and then the partial decoding result is used as prediction reference information to decode a next undecoded channel latent code group. The selection of the decoded channel latent code group may be random selection.

The channel refers to a component that forms color information of a color image, or is configured for representing a feature component of an image. For an RGB color model, the color image includes three color channels: red (R), green (G), and blue (B). For an HSV color model, the color image includes three channels: hue, saturation, and brightness.

In some embodiments, when the channel dimension corresponds to a color dimension, including a red (R) dimension, a green (G) dimension, and a blue (B) dimension, the first latent code is grouped based on the three color dimensions, to obtain a channel latent code group corresponding to the red (R) dimension, a channel latent code group corresponding to the green (G) dimension, and a channel latent code group corresponding to the blue (B) dimension. Each latent code group includes a plurality of pixels.

In this way, after the first latent code is grouped in the channel dimension, checkerboard auto regression is used in place of serial auto regression inside each latent code group, so that auto regression processing is alternately performed orthogonally in space and channel dimensions, and an undecoded channel group is predicted by using a first-decoded channel group.

At 3004: Generate a compressed image corresponding to the to-be-compressed image based on the partial decoding result of the first latent code and the first latent code corresponding to the to-be-compressed image.

A data volume of the compressed image is less than a data volume of the to-be-compressed image.

In some embodiments, based on the partial decoding result of the first latent code and the first latent code corresponding to the to-be-compressed image, the compressed image corresponding to the to-be-compressed image may be generated in the following manner: generating a new image by performing autoregressive modeling on each pixel of an image based on the partial decoding result of the first latent code and the first latent code corresponding to the to-be-compressed image. The process may include Masked convolution and pixel-by-pixel conditional probabilistic modeling. For example, for each convolutional layer, a future pixel is masked by using a proper mask, to ensure that a probability distribution of a pixel value of a current pixel can be predicted only by using a known pixel value during training. Conditional modeling is performed on each pixel by using a series of convolutional layers. Each convolutional layer is responsible for modeling a subset of an input image. By modeling a conditional probability distribution of each pixel (given pixel values on the left and top of the pixel), a possible value of the current pixel may be predicted by using a known pixel.

The conditional probability distribution refers to a probability distribution in which a variable Y takes each possible value in a case that a variable X is given, that is, a distribution of Y in a case that X is given. A conditional probability distribution of each pixel is modeled, that is, for each pixel such as a target pixel, a distribution of possible pixel values of the target pixel in a case that pixel values of associated pixels (such as pixel values on the left and top of the pixel) of the target pixel are given.

In some embodiments, based on the partial decoding result of the first latent code and the first latent code corresponding to the to-be-compressed image, the compressed image corresponding to the to-be-compressed image may be generated in the following manner: quantizing the first latent code, to obtain a second latent code; performing auto regression on the second latent code according to the partial decoding result, to obtain a mean and a variance of the second latent code; and decoding the second latent code by using the mean and the variance, to obtain the compressed image.

In some embodiments, the process of quantizing the first latent code may be considered as a process of performing dimension reduction on the first latent code. For example, the first latent code is mapped to a preset low-dimensional space to obtain the second latent code. The low-dimensional space refers to a low-dimensional space relative to a dimension of the first latent code. In actual application, the first latent code may be quantized in a non-linear dimension reduction manner or a quantization matrix manner. An operation of quantizing the first latent code may further be implemented through a vector quantizer. The vector quantizer is a system that maps a continuous or discrete vector sequence into a number sequence suitable for communication or storage on a digital channel. By quantizing the first latent code, data compression is implemented while necessary fidelity of data is maintained.

In some embodiments, the process of performing auto regression on the second latent code based on the partial decoding result to obtain the mean and the variance of the second latent code may be implemented in the following manner: constructing series data according to the partial decoding result and the second latent code; fitting the series data through at least one of an auto regression model or a conditional heteroskedasticity model, to obtain at least one of a mean dynamic model or a variance dynamic model of the second latent code; and separately performing parameter estimation on the mean dynamic model and the variance dynamic model of the second latent code through maximum likelihood estimation or another parameter estimation method, to obtain the mean and the variance of the second latent code.

The autoregressive model is described. The autoregressive model is a stationary time series model, and may be configured to predict and analyze data with autocorrelation. By constructing the autoregressive model, whether there is a dependency relationship between data at different time points and strength of the dependency relationship may be studied. The autoregressive model is used to fit and analyze series data, and an average trend change of a random variable value at a future moment may be predicted, to obtain the mean dynamic model of the second latent code.

The conditional heteroskedasticity model is described. The conditional heteroskedasticity model is a model configured to describe that there is a heterovariance (that is, a variance is not constant) in time series/series data. In actual application, a variance of data may change obviously as time or another factor changes. The conditional heteroskedasticity model can better capture this heterovariance. The variance dynamic model can be obtained by fitting the series data through the conditional heteroskedasticity model.

The mean dynamic model and the variance dynamic model of the second latent code are described. The mean dynamic model is a model for describing an average trend change of time series data, and is configured to describe an average trend change of series data and indicate a dynamic feature in the series data. The dynamic variance model is a model configured to describe a variance change of the time series data, and is configured for a dynamic change of the variance of the time series data.

In some embodiments, the second latent code may be decoded by using the mean and the variance to obtain the compressed image in the following manner: constructing a multivariate Gaussian distribution according to a mean and a variance of a latent code, where when during construction of the Gaussian distribution, it needs to be ensured that a dimension of the distribution is the same as a dimension of the latent code; extracting a specific quantity of samples from the constructed Gaussian distribution, where these samples represent possible values of the latent code in a case that the mean and the variance of the latent code are given; using an extracted sample value as an input of the latent code, and decoding the extracted sample value through a decoder, where the decoder is generally a neural network structure corresponding to an encoder, and can map the latent code back to an original image space; and mapping the input into a generated image through the decoder.

In some embodiments, the second latent code may further be decoded by using the mean and the variance to obtain the compressed image in the following manner: decoding the second latent code by using the mean and the variance to obtain a decoding result of the second latent code; and alternately performing splitting and attention mechanism shifting on the decoding result of the second latent code until the decoding result of the second latent code is completely split, to obtain the compressed image. The second latent code is obtained by quantizing the first latent code. Compared with the first latent code, the second latent code includes more abstract and compressed information for decoding or reconstructing an image, so that the to-be-compressed image is compressed based on the second latent code, and the image compression efficiency can be improved.

Splitting the decoding result of the second latent code means splitting the decoding result of the second latent code into different regions or patches. In this way, parallel processing can be performed to improve the efficiency. An attention mechanism is used to focus on a specific part in a region after splitting, so that a related part of the image can be processed more intensively, thereby improving the accuracy of image reconstruction. In some embodiments, the alternately performing splitting and attention mechanism shifting on the decoding result of the second latent code until the decoding result of the second latent code is completely split, to obtain the compressed image includes:

splitting the decoding result of the second latent code into a target quantity of different regions, and applying an attention mechanism for each region;

iteratively performing the foregoing processing until a quantity of patches into which the decoding result of the second latent code is split reaches a quantity threshold (that is, the decoding result of the second latent code is completely split), to obtain a plurality of image regions; and

combining the plurality of obtained image regions to obtain the compressed image.

Through the processing operations shown in FIG. 3A, auto regression is performed alternately in the space dimension and the channel dimension, so that the compression efficiency is greatly improved. For an input image, in a compression process, image transformation is first performed on the input image to generate a low-dimensional latent code, then probability estimation modeling is performed on the latent code, and finally the latent code is compressed into a bit stream by using an entropy encoding processing method according to a calculated probability. In a decompression process, the latent code is first restored according to the bit stream, and then an image is reconstructed according to the latent code, to implement efficient compression of the image.

During actual use, the processing operations shown in FIG. 3A may be implemented by using an image processing model. Different from the image processing model in the related art, the image processing model used in the image compression method provided in the present disclosure includes: an image transformation network, a hyper prior network, and a context network. Working processes of the image processing model including the image transformation network, the hyper prior network, and the context network are respectively described below.

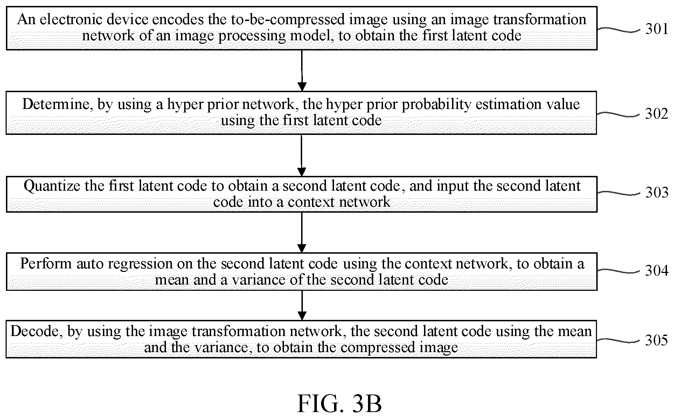

FIG. 3B is a schematic flowchart of an image compression method according to an embodiment of the present disclosure. The operations shown in FIG. 3B may be performed by various electronic devices running an image compression apparatus, for example, a server or a server cluster having an image compression function, configured to compress each image frame in a received image or a received video through the image processing model, to reduce a storage space occupied by images. The following describes the operations shown in FIG. 3B.

At 301: An electronic device encodes the to-be-compressed image through an image transformation network of an image processing model, to obtain the first latent code.

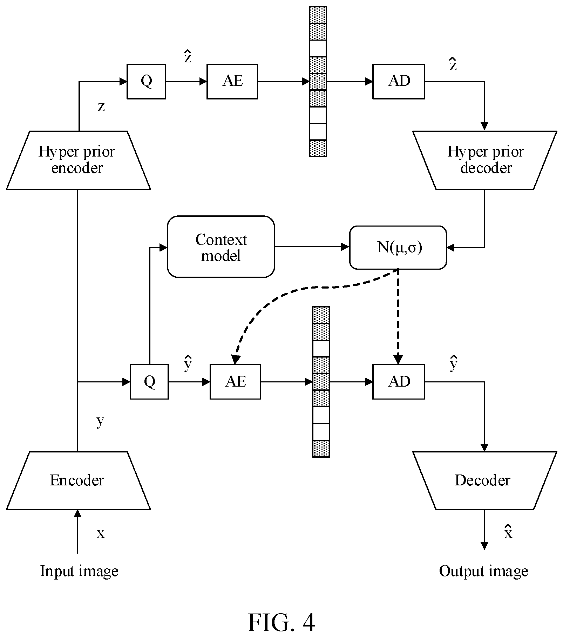

FIG. 4 is a schematic diagram of data flow of an image processing model according to an embodiment of the present disclosure. The image processing model in the present disclosure includes an image transformation network, a hyper prior network, and a context network. Functions are as follows:

(1) The function of the image transformation network is to generate a low-dimensional latent code by using a high-resolution natural image. Assuming that the first latent code follows an inherent prior probability, and an inputted to-be-compressed image follows a conditional probability conditional on a latent code, the image transformation network needs to enable probability estimations constructed by an encoder and a decoder to be sufficiently close, so that an image reconstructed by the latent code is close to an original image.

(2) The hyper prior network models an entropy value of each point in the latent code based on the latent code by using an encoder structure and a decoder structure, and estimates a bit rate of the compressed image and performs entropy encoding through an occurrence of an entropy value feature point in a process of obtaining an entropy model of a feature value. The hyper prior network may store probabilistic modeling of the latent code by using a small quantity of bytes, to provide an auxiliary reference for subsequent decoding of the context network.

(3) The context network predicts undecoded pixel information by using decoded pixel information in an auto regression manner, and finally inputs a predicted result into a decoder network of the image transformation network for decoding, to obtain the compressed image. The context network can reduce the information redundancy and improve the image compression efficiency.

The following respectively describes model structures and working principles of the image transformation network, the hyper prior network, and the context network included in the image processing model.

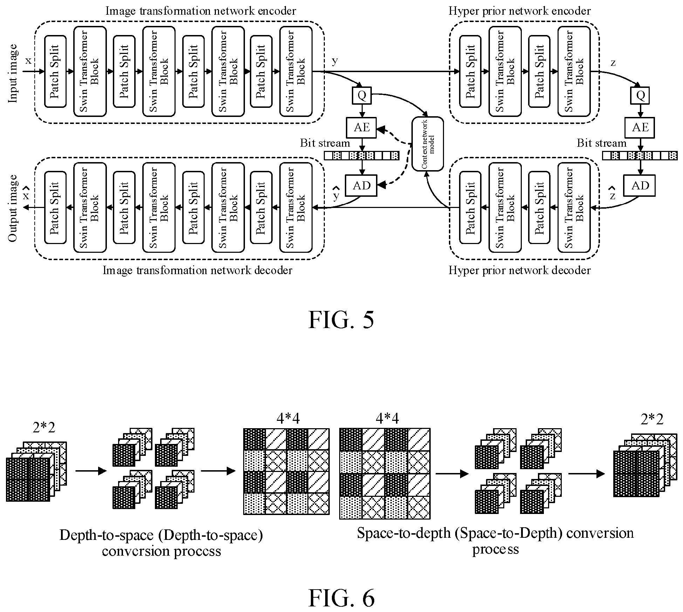

FIG. 5 is a schematic diagram of a model structure of an image processing model according to an embodiment of the present disclosure. The image transformation network includes: an image encoder network and an image decoder network. The image encoder network includes: a shifted window attention mechanism module (Swin Transformer Block) and a patch merge module (Patch Merge Block). The patch merge module sequentially includes: a space-to-depth conversion layer (Space-to-Depth), a normalization layer (LayerNorm), and a mapping layer (Linear). The image decoder network includes: a shifted window attention mechanism module (Swin Transformer Block) and a patch split module (Patch Split Block). The patch split module sequentially includes: a mapping layer (Linear), a normalization layer (LayerNorm), and a depth-to-space conversion layer (Depth-to-Space).

FIG. 6 is a schematic diagram of a working process of a space-to-depth conversion layer and a depth-to-space conversion layer according to an embodiment of the present disclosure. Since the image processing model needs to compress the to-be-compressed image, so that a volume of the compressed image is smaller than a volume of the to-be-compressed image, but a resolution of the compressed image is close to a resolution of the to-be-compressed image. Therefore, the space-to-depth conversion layer (Space-to-Depth) in the encoder network is configured to perform down-sampling, and the depth-to-space conversion layer (Depth-to-Space) in the decoder network is configured to perform up-sampling. As shown in FIG. 6, for a 4*4 to-be-compressed image, Space-to-Depth divides adjacent 2*2 pixels into one patch, splices pixels at the same position (same shadow) in each patch, and connects the pixels along a channel direction, to obtain four 2*2 patches. Depth-to-Space is a reverse operation of Space-to-Depth, and four 2*2 patches are converted into a 4*4 image through up-sampling.

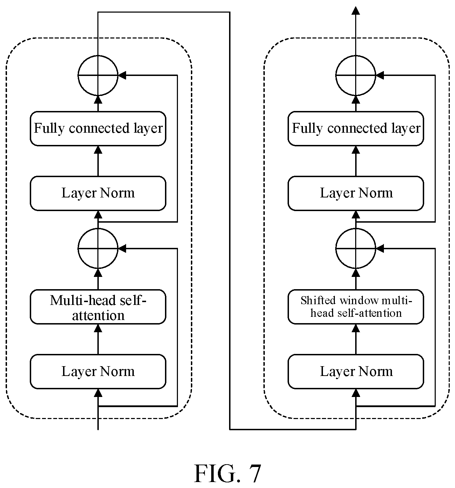

FIG. 7 is a schematic diagram of a composition structure of a shifted window attention mechanism module according to an embodiment of the present disclosure. The shifted window attention mechanism module (Swin Transformer block) mainly includes layer standardization, a multi-layer perceptron, a normal window multi-attention mechanism, and a shifted window multi-head attention mechanism. Compared with a conventional attention mechanism, the window attention mechanism can effectively reduce the calculation complexity in an operation process, and can greatly improve the calculation efficiency, so that the attention mechanism can be applied to a large image processing process. However, if a receptive field of a framework is severely limited only by using a normal window attention mechanism, a receptive field of the attention mechanism is greatly improved by adding a shifted window attention mechanism without increasing the calculation complexity. The shifted window attention mechanism module constructs a hierarchical feature map by combining image patches at a deeper layer, and since attention is calculated only within each local window, there is linear calculation complexity for a size of the input image. As shown in FIG. 7, in the present disclosure, the shifted window attention mechanism module performs local self-attention in each non-overlapping window of the feature map, and retains a feature size. FIG. 7 shows an internal structure of two continuous Swin Transformer Blocks, including a Layer Norm, a multi-head self-attention layer, and a fully connected layer, which are connected internally by using a short cut. The encoder network and the decoder network of the image transformation network use a window size of 8, channel quantities of 128, 192, 256, and 320 in sequence, and quantities of superpositions of the shifted window attention mechanism module of 2, 2, 6, and 2 in sequence.

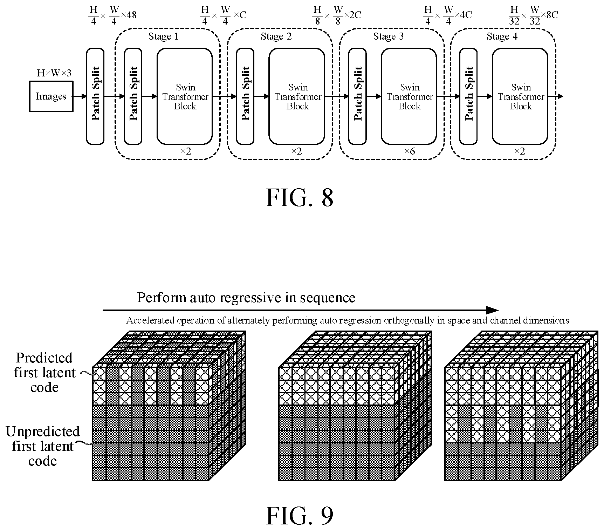

FIG. 8 is a schematic diagram of a calculation principle of a shifted window attention mechanism module according to an embodiment of the present disclosure. Input images H x W x 3 are grouped into a non-overlapping patch set, where a size of each patch is 4 x 4, a feature dimension of each patch is 4 x 4 x 3 = 48, and a quantity of patches is H/4 x W/4. As shown in FIG. 8, stage 1: The feature dimension of the patch after the grouping is first changed to C through a linear embedding, and then transmitted to the shifted window attention mechanism module. The operations of stage 2 to stage 4 are the same. First, through a patch merging, inputs are combined according to adjacent 2 x 2 patches. In this way, the quantity of sub-patches changes to H/8 x W/8, and the feature dimension changes to 4C. As shown in FIG. 8, a processing result of each shifted window attention mechanism module is as follows: stage 1: [H/4 x W/4, C], stage 2: [H/8 x W/8, 2C], stage 3: [H/16 x W/16, 4C], and stage 4: [H/32 x W/32, 8C]. As a network depth increases, a quantity of shifted window attention mechanism modules gradually decreases and a perception range of each patch expands. This design is to facilitate hierarchical construction of the shifted window attention mechanism modules, and can adapt to multi-scale visual tasks.

At 302: Determine the hyper prior probability estimation value according to the first latent code through a hyper prior network.

As shown in FIG. 4, the encoder network of the hyper prior network includes: a shifted window attention mechanism module and a patch merge module. The decoder network of the hyper prior network includes: a shifted window attention mechanism module and a patch split module, the window size is 4, the quantities of channels are 192 and 192 in sequence, and the quantities of superpositions of the shifted window attention mechanism module are 5 and 1 in sequence.

In some embodiments, the determining the hyper prior probability estimation value according to the first latent code through a hyper prior network may be implemented in the following manner:

encoding a first latent code y through a hyper prior encoder of the hyper prior network, to obtain a third latent code z; and determining the hyper prior probability estimation value corresponding to the first latent code through a quantization module (Q), an arithmetic encoding module (AE), and an arithmetic decoding module (AD) of the hyper prior network. The third latent code z is quantized through the quantization module (Q) of the hyper prior network, to obtain a fourth latent code $\hat{z}$. During compression, entropy encoding is performed on the fourth latent code $\hat{z}$ by using the arithmetic encoding module to obtain a byte stream (that is, an entropy code of the fourth latent code $\hat{z}$). During decompression, the fourth latent code is decoded from the byte stream by using an arithmetic decoder. As shown in FIG. 4, the fourth latent code is obtained after the third latent code z is quantized. During compression, the fourth latent code is compressed to obtain the byte stream. During decompression, the fourth latent code is restored from the byte stream, and the fourth latent code $\hat{z}$ is decoded through the decoder network of the hyper prior network shown in FIG. 4, to obtain the hyper prior probability estimation value $N(\mu,\sigma)$.

In some embodiments, since an occurrence probability or a cumulative probability distribution function (CDF) of a decoding point is required at the stages of arithmetic encoding and arithmetic decoding on the compressed latent code by using a Gaussian distribution parameter, the occurrence probability or the cumulative distribution function needs to be transmitted to a decoder end for correct entropy decoding. Therefore, the encoder of the hyper prior network needs to first compress the probability or the cumulative distribution function into z, perform quantized entropy encoding on z for transmission to the decoder end of the encoder of the hyper prior network, and decode and learn a modeling parameter potentially representing y through the decoder end. After the modeling distribution potentially representing y is obtained through the encoder of the hyper prior network, the modeling is performed on the modeling distribution and entropy encoding is performed on the quantized second latent code to obtain a compressed bit stream file, arithmetic decoding is performed to obtain ŷ from the byte stream, and an entropy decoding result is inputted into the decoding module to obtain the final compressed image.

At 303: Quantize the first latent code to obtain a second latent code, and input the second latent code into a context network.

At 304: Perform auto regression on the second latent code through the context network, to obtain a mean and a variance of the second latent code.

After the electronic device calculates the mean and the variance of the second latent code through the context network, the arithmetic encoder performs modeling according to the probability distribution of the second latent code to obtain the byte stream.

The electronic device performs auto regression on the second latent code according to the partial decoding result through the context network, performs probabilistic modeling on the second latent code, and calculates the mean and the variance of the second latent code. Then, the arithmetic encoder performs modeling according to the probability distribution of the second latent code to obtain the byte stream.

FIG. 9 is a schematic diagram of auto regression of a context network according to an embodiment of the present disclosure. In some embodiments, the context network performs auto regression on the second latent code according to the partial decoding result to obtain the mean and the variance of the second latent code, which may be implemented in the following manner:

grouping the second latent code, to obtain at least two groups of latent sub-codes; performing spatial auto regression on each group of latent sub-codes through a checkerboard grid; and predicting an undecoded channel group through the partial decoding result when spatial auto regression is completed for each group of latent sub-codes, until auto regression is completely completed for the second latent code, to obtain a probability distribution of the second latent code.

The spatial auto regression generally assumes that a feature of a spatial position is related to a feature of a nearby position around the spatial position. Such a correlation may be represented by a weight matrix (generally referred to as a spatial weight matrix). The matrix describes a spatial relationship between spatial points, and an association between a latent sub-code and a predicted result may be described by using the spatial weight matrix.

For example, auto regression in a space dimension may be implemented in the following manner: associating a currently decoded symbol with a decoded symbol, performing probabilistic modeling on a code, and predicting a context expression $\Phi_{sp,i}$ at an $i^{th}$ position according to all observable adjacent symbols $\hat{y}_{<i}$ by using an autoregressive convolution $g_{sp}$ in a space direction. For calculation of the context expression in the context network, refer to Formula 1:

$$\hat{y}_{<i} = \{\hat{y}_1, ..., \hat{y}_{i-1}\}$$

$$\Phi_{sp,i} = g_{sp}(\hat{y}_{<i}) \qquad \text{Formula 1}$$

Auto regression in a channel dimension may be implemented in the following manner: dividing channels of the second latent code into K groups for auto regression, to reduce redundancy between the channels. For a process of predicting a context expression $\Phi_{ch}^{(k)}$ of an undecoded channel group by performing autoregressive convolution $g_{ch}$ in a channel direction by using a first-decoded channel group, refer to Formula 2:

$$\Phi_{ch}^{(k)} = g_{ch}^{(k)}(\hat{y}^{<k}), k = 2, ..., K \qquad \text{Formula 2}$$

In channel auto regression, setting a quantity of channel groups is crucial to balancing the compression performance and an operational speed. A greater quantity k of groups indicates a finer calculation granularity and better rate-distortion performance, but slower parameter estimation. As the quantity of groups, k = 5 is an optimal value of the image processing model in the present disclosure.

As shown in FIG. 9, with reference to a checkerboard spatial context auto regression model and a channel context auto regression model, an accelerated operation of alternately performing auto regression orthogonally in space and channel dimensions is implemented. In actual application, the latent codes are grouped in a channel dimension, and checkerboard auto regression is used in place of serial auto regression inside each latent code group. After spatial auto regression is completed inside the second latent code group, channel auto regression is used to predict an undecoded channel group by using a first-decoded channel group. In an initial stage of auto regression, the context network performs auto regression prediction according to hyper prior probabilistic modeling, first predicts a first part of checkerboard in a first channel group, and then predicts remaining checkerboard parts according to a currently predicted checkerboard result. After the two chessboard auto regressions are performed, prediction for the first channel group is completed. During prediction of the second group of channel groups, the predicted result of the first group is used as information for subsequent probabilistic modeling to perform an operation. The entire operation process alternately performs auto regression orthogonally in space and channel dimensions, thereby effectively improving an image compression rate.

At 305: Decode the second latent code by using the mean and the variance through the image transformation network, to obtain the compressed image.

With reference to FIG. 4, the second latent code is decoded through the shifted window attention mechanism module of the decoder network of the image transformation network, to obtain the decoding result of the second latent code; and the compressed image is obtained through the shifted window attention mechanism module and the patch split module alternately by using the second latent code, where a volume of the compressed image is smaller than a volume of the to-be-compressed image.

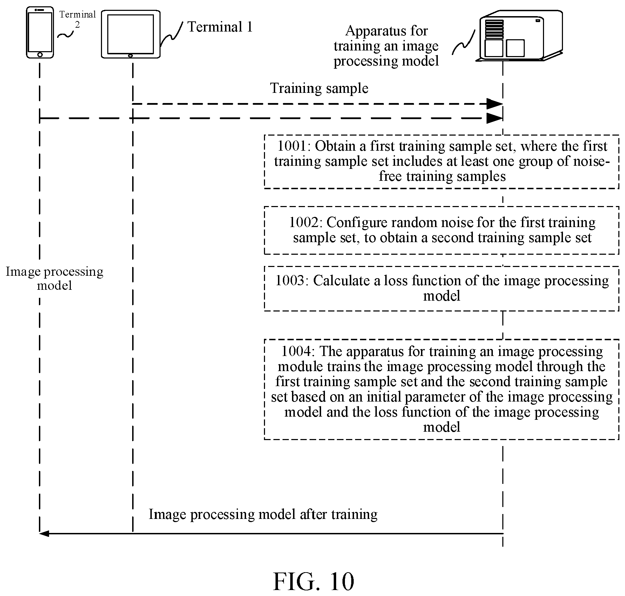

FIG. 10 is a schematic flowchart of a method for training an image processing model according to an embodiment of the present disclosure. The operations shown in FIG. 10 may be performed by various electronic devices running the apparatus for training an image processing model, for example, may be a dedicated terminal having an image processing function, or a server or a server cluster having an image processing model training function. The following describes the operations shown in FIG. 10.

At 1001: An apparatus for training an image processing model obtains a first training sample set, where the first training sample set includes at least one group of noise-free training samples.

At 1002: The apparatus for training an image processing model configures random noise for the first training sample set, to obtain a second training sample set.

In some embodiments, the configuring random noise for the first training sample set, to obtain a second training sample set may be implemented in the following manner:

when a use environment of the image processing model is applet game image generation, determining a dynamic noise amount threshold matching the use environment of the image processing model; and configuring a dynamic amount of random noise for the first training sample set according to the dynamic noise amount threshold, to generate the second training sample set matching the dynamic noise amount threshold. An applet game image may be used in various environments, for example, may be a role-playing applet game image, may be a user image collected by a terminal as the applet game image, or may be an image captured in a video image frame as the applet game image. Since training samples are derived from different data sources, the data sources include data of various types of application scenarios as data sources of the corresponding training samples. For different use scenarios of the image processing model, the second training sample set matching the dynamic noise amount threshold may be used to perform targeted training on the image processing model.

In some embodiments, the configuring random noise for the first training sample set, to obtain a second training sample set may be implemented in the following manner:

when a use environment of the image processing model is medical image generation, determining a fixed noise amount threshold matching the use environment of the image processing model; and configuring a fixed amount of random noise for the first training sample set according to the fixed noise amount threshold, to generate the second training sample set matching the fixed noise amount threshold. Since a training sample is derived from a fixed data source, the data source includes data in a fixed scenario as a data source of a corresponding training sample (for example, any electronic device that generates a medical image). For example, the image processing model provided in the present disclosure may be packaged in a mobile detection electronic device as a software module, or may be packaged in different fixed medical inspection devices (including but not limited to a handheld diagnostics device, a central monitoring system of a patient room, and a bedside monitoring system), or definitely, may be cured in a hardware device of a smart robot. For different use scenarios of the image processing model, the second training sample set matching the fixed noise amount threshold may be used to perform targeted training on the image processing model to improve a training speed of the image processing model.

At 1003: The apparatus for training an image processing model calculates a loss function of the image processing model.

In some embodiments of the present disclosure, first, a pixel difference between the compressed image and the to-be-compressed image is obtained; then, a quantity of bytes for storing the second latent code and a fourth latent code in the image processing model is obtained; and finally, a fused loss function of the image processing model is calculated according to the pixel difference and the quantity of bytes. For the loss function of the image processing model, refer to Formula 3:

$$L = R + \lambda D \qquad \text{Formula 3}$$

R represents rate, and are required bytes for storing the second latent code and the fourth latent code. D represents distortion, and generally calculates a difference between the compressed image and the to-be-compressed image by using d (x, x̂), where d is generally a mean square error (MSE). $\lambda$ is a parameter for controlling rate and distortion. Generally, a greater $\lambda$ indicates a greater pixel depth (BPP Bits Per Pixel) corresponding to the model, and higher quality of image reconstruction.

At 1004: Train the image processing model through the first training sample set and the second training sample set based on an initial parameter of the image processing model and the loss function of the image processing model.

The image transformation network parameter, the hyper prior network parameter, and the context network parameter of the image processing model are determined through training of the image processing model.

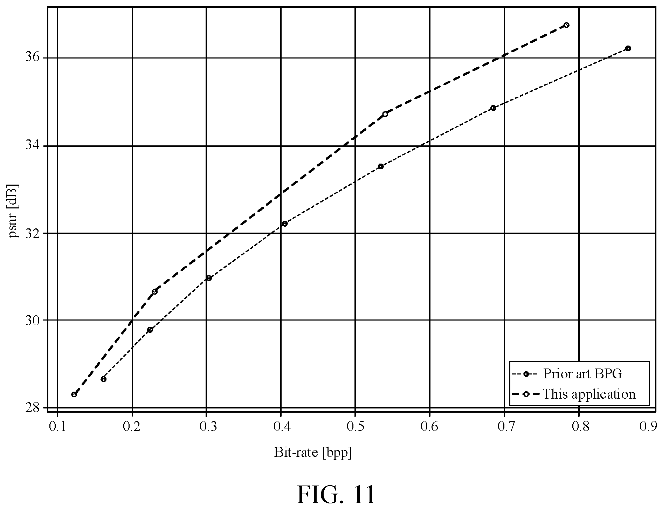

In a testing stage after training is completed, FIG. 11 is a schematic diagram of effect testing of an image processing model according to an embodiment of the present disclosure. Performance testing is performed on a standard data set Kodak, and rate-distortion performance of the model at different compression rates is drawn by using bpp as an abscissa and a peak signal to noise ratio (PSNR) as an ordinate. Values of $\lambda$ of four testing points in the image processing model of the present disclosure are 0.002, 0.005, 0.02, and 0.04 in sequence. The image processing model of the present disclosure improves the image compression efficiency, and reduces the volume of the compressed image. When PSNR = 32, bpp = 0.4 in the present disclosure is greater than bpp = 0.25 in the related art.

The present disclosure has the following beneficial technical effects:

In this embodiment of the present disclosure, an image transformation network of an image processing model encodes a to-be-compressed image to obtain a first latent code, and a hyper prior network determines a hyper prior probability estimation value according to the first latent code. Therefore, the image is processed by using the image transformation network constructed by using a shifted window attention mechanism and the hyper prior network, so that the performance of image compression can be improved, the volume of a compressed image obtained through decoding can be reduced, and storage costs of the image can be reduced.

A context network partially decodes the first latent code according to the hyper prior probability estimation value, to obtain the partial decoding result. The context network performs auto regression on a second latent code according to the partial decoding result, to obtain a mean and a variance of the second latent code; and decodes the second latent code by using the mean and the variance to obtain the compressed image, where a volume of the compressed image is smaller than a volume of the to-be-compressed image. Therefore, the context network uses first-decoded channel group information as prior knowledge of a subsequently to-be-decoded channel group, to reduce subsequent compression redundancy, and reduce time consumed for image compression. In addition, the context network may perform auto regression alternately in space and channel dimensions, thereby improving compression efficiency.

During training of the image processing model, a training sample set may be flexibly adjusted according to different use requirements, so that the image processing model can be applied to different image compression environments.

The foregoing descriptions are merely preferred embodiments of the present disclosure, but are not intended to limit the protection scope of the present disclosure. Any modification, equivalent replacement, and improvement made within the spirit and principle of the present disclosure shall fall within the protection scope of the present disclosure.

**Claims**

1. A method for image compression, performed by an electronic device, the method comprising:

   encoding a to-be-compressed image, to obtain a first latent code corresponding to the to-be-compressed image;
   determining a hyper prior probability estimation value corresponding to the first latent code;
   partially decoding the first latent code using the hyper prior probability estimation value, to obtain a partial decoding result of the first latent code; and
   generating a compressed image corresponding to the to-be-compressed image using the partial decoding result of the first latent code and the first latent code corresponding to the to-be-compressed image, wherein a data volume of the compressed image is less than a data volume of the to-be-compressed image.

2. The method of claim 1, wherein generating the compressed image corresponding to the to-be-compressed image using the partial decoding result of the first latent code and the first latent code corresponding to the to-be-compressed image comprises:

   quantizing the first latent code, to obtain a second latent code;
   performing auto regression on the second latent code using the partial decoding result, to obtain a mean and a variance of the second latent code; and

decoding the second latent code using the mean and the variance, to obtain the compressed image.

3. The method of claim 2, wherein performing auto regression on the second latent code using the partial decoding result, to obtain the mean and the variance of the second latent code comprises:

grouping the second latent code, to obtain at least two groups of latent sub-codes;
performing spatial auto regression on each of the at least two groups of latent sub-codes through a checkerboard grid; and
predicting an undecoded channel group using the partial decoding result when spatial auto regression is completed for each of the at least two groups of latent sub-codes, until auto regression is completely completed for the second latent code, to obtain the mean and the variance of the second latent code.

4. The method of claim 2, wherein decoding the second latent code using the mean and the variance, to obtain the compressed image comprises:

decoding the second latent code using the mean and the variance to obtain a decoding result of the second latent code; and
alternately performing splitting and attention mechanism shifting on the decoding result of the second latent code until the decoding result of the second latent code is completely split, to obtain the compressed image.

5. The method of claim 2, wherein the method is implemented using an image processing model, the image processing model comprises an image transformation network, a hyper prior network, and a context network,
wherein encoding the to-be-compressed image, to obtain the first latent code corresponding to the to-be-compressed image comprises:

encoding the to-be-compressed image using the image transformation network of the image processing model, to obtain the first latent code;
wherein determining the hyper prior probability estimation value corresponding to the first latent code comprises:

determining, by using the hyper prior network, the hyper prior probability estimation value using the first latent code;
wherein partially decoding the first latent code using the hyper prior probability estimation value, to obtain the partial decoding result of the first latent code comprises:

partially decoding, by using the context network, the first latent code using the hyper prior probability estimation value, to obtain the partial decoding result;
wherein performing auto regression on the second latent code using the partial decoding result, to obtain the mean and the variance of the second latent code comprises:

performing, by using the context network, auto regression on the second latent code using the partial decoding result, to obtain the mean and the variance of the second latent code; and
wherein decoding the second latent code using the mean and the variance, to obtain the compressed image comprises:
decoding, by using the image transformation network, the second latent code using the mean and the variance, to obtain the compressed image.

6. The method of claim 5, wherein the image transformation network comprises: an image encoder network and an image decoder network, wherein

the image encoder network comprises: a shifted window attention mechanism module and a patch merge module, wherein the patch merge module sequentially comprises: a space-to-depth conversion layer, a normalization layer, and a mapping layer; and
the image decoder network comprises: a shifted window attention mechanism module and a patch split module, wherein the patch split module sequentially comprises: a mapping layer, a normalization layer, and a depth-to-space conversion layer.

7. The method of claim 5, further comprising:

obtaining a first training sample set corresponding to the image processing model, wherein the first training sample set comprises at least one group of noise-free training samples;

configuring random noise for the first training sample set, to obtain a second training sample set;

obtaining an initial parameter of the image processing model; and

training, using the initial parameter of the image processing model and a loss function of the image processing model, the image processing model using the first training sample set and the second training sample set, to determine an image transformation network parameter, a hyper prior network parameter, and a context network parameter of the image processing model.

8. The method of claim 7, wherein configuring random noise for the first training sample set, to obtain the second training sample set comprises:

determining, when a use environment of the image processing model is video image compression, a dynamic noise amount threshold matching the use environment of the image processing model; and

configuring a dynamic amount of random noise for the first training sample set using the dynamic noise amount threshold, to obtain the second training sample set matching the dynamic noise amount threshold.

9. The method of claim 7, wherein configuring random noise for the first training sample set, to obtain the second training sample set comprises:

determining, when a use environment of the image processing model is medical image compression, a fixed noise amount threshold matching the use environment of the image processing model; and

configuring a fixed amount of random noise for the first training sample set using the fixed noise amount threshold, to obtain the second training sample set matching the fixed noise amount threshold.

10. The method of claim 7, further comprising:

obtaining a pixel difference between the compressed image and the to-be-compressed image;

obtaining a quantity of bytes for storing the second latent code and a fourth latent code in the image processing model; and

determining a fused loss function of the image processing model using the pixel difference and the quantity of bytes.

11. The method of any one of claims 1 to 10, wherein determining the hyper prior probability estimation value corresponding to the first latent code comprises:

encoding the first latent code, to obtain a third latent code;

performing entropy encoding on the third latent code, to obtain an entropy code of the third latent code;

decoding the entropy code of the third latent code, to obtain the fourth latent code; and

decoding the fourth latent code, to obtain the hyper prior probability estimation value.

12. An apparatus for image compression, comprising:

an encoding module, configured to encode a to-be-compressed image, to obtain a first latent code corresponding to the to-be-compressed image; and

an information processing module, configured to:

determine a hyper prior probability estimation value corresponding to the first latent code;

partially decode the first latent code using the hyper prior probability estimation value, to obtain a partial decoding result of the first latent code; and

generate a compressed image corresponding to the to-be-compressed image using the partial decoding result of the first latent code and the first latent code corresponding to the to-be-compressed image, wherein a data volume of the compressed image is less than a data volume of the to-be-compressed image.

13. An electronic device, comprising:

a memory, configured to store executable instructions; and

a processor, configured to, when running the executable instructions stored in the memory, perform the method for image compression of any one of claims 1 to 11.

14. A computer program product comprising a computer program or instructions, wherein the computer program or instructions, when executed by a processor, cause the processor to perform the method for image compression of any one of claims 1 to 11.

15. A computer-readable storage medium having stored therein executable instructions that, when executed by a processor, cause the processor to perform the method for image compression of any one of claims 1 to 11.

FIG. 1

FIG. 2

Encode a to-be-compressed image, to obtain a first latent code corresponding to the to-be-compressed image — 3001

Determine a hyper prior probability estimation value corresponding to the first latent code — 3002

Partially decode the first latent code using the hyper prior probability estimation value, to obtain a partial decoding result of the first latent code — 3003

Generate a compressed image corresponding to the to-be-compressed image using the partial decoding result of the first latent code and the first latent code corresponding to the to-be-compressed image — 3004

FIG. 3A

An electronic device encodes the to-be-compressed image using an image transformation network of an image processing model, to obtain the first latent code ⟋⟍ 301

Determine, by using a hyper prior network, the hyper prior probability estimation value using the first latent code ⟋⟍ 302

Quantize the first latent code to obtain a second latent code, and input the second latent code into a context network ⟋⟍ 303

Perform auto regression on the second latent code using the context network, to obtain a mean and a variance of the second latent code ⟋⟍ 304

Decode, by using the image transformation network, the second latent code using the mean and the variance, to obtain the compressed image ⟋⟍ 305

# FIG. 3B

FIG. 4

Image transformation network encoder

Hyper prior network encoder

Input image x

Patch Split | Swin Transformer Block | Patch Split | Swin Transformer Block | Patch Split | Swin Transformer Block | Patch Split | Swin Transformer Block

y

Patch Split | Swin Transformer Block | Patch Split | Swin Transformer Block

z

Q

AE

Bit stream

Context network model

Q

AE

Bit stream

Output image x̂

Patch Split | Swin Transformer Block | Patch Split | Swin Transformer Block | Patch Split | Swin Transformer Block | Patch Split | Swin Transformer Block

ŷ

AD

Patch Split | Swin Transformer Block | Patch Split | Swin Transformer Block

ẑ

AD

Image transformation network decoder

Hyper prior network decoder

FIG. 5

2*2

4*4          4*4

2*2

Depth-to-space (Depth-to-space) conversion process

Space-to-depth (Space-to-Depth) conversion process

FIG. 6

23

FIG. 7

$\frac{H}{4} \times \frac{W}{4} \times 48$  $\frac{H}{4} \times \frac{W}{4} \times C$  $\frac{H}{8} \times \frac{W}{8} \times 2C$  $\frac{H}{4} \times \frac{W}{4} \times 4C$  $\frac{H}{32} \times \frac{W}{32} \times 8C$

FIG. 8

Perform auto regressive in sequence

Accelerated operation of alternately performing auto regression orthogonally in space and channel dimensions

Predicted first latent code

Unpredicted first latent code

FIG. 9

Terminal 2

Terminal 1

Apparatus for training an image processing model

Training sample

1001: Obtain a first training sample set, where the first training sample set includes at least one group of noise-free training samples

1002: Configure random noise for the first training sample set, to obtain a second training sample set

1003: Calculate a loss function of the image processing model

1004: The apparatus for training an image processing module trains the image processing model through the first training sample set and the second training sample set based on an initial parameter of the image processing model and the loss function of the image processing model

Image processing model

Image processing model after training

FIG. 10

FIG. 11

## INTERNATIONAL SEARCH REPORT

| International application No. |
| --- |
| **PCT/CN2023/138206** |

| | |
| --- | --- |
| **A.** | **CLASSIFICATION OF SUBJECT MATTER** |
| | H04N 19/42(2014.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CJFD, CNTXT, VEN, WOTXT, USTXT, EPTXT: 图像, 压缩, 编码, 部分, 解码, 解压缩, 隐编码, 隐变量, 隐性码, 超先验, 概率, 估计, 一个, 第一, 第二, image, code, encode, decode, compress, decompress, code latent, hyper prior, probability, estimate, one, first, second, partially

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 116980611 A (TENCENT TECHNOLOGY (SHENZHEN) CO., LTD.) 31 October 2023 (2023-10-31)<br>claims 1-14 | 1-15 |
| A | CN 114663536 A (INSTITUTE OF AUTOMATION, CHINESE ACADEMY OF SCIENCES) 24 June 2022 (2022-06-24)<br>entire document | 1-15 |
| A | CN 113574883 A (QUALCOMM INC.) 29 October 2021 (2021-10-29)<br>entire document | 1-15 |
| A | WO 2022268641 A1 (INTERDIGITAL VC HOLDINGS FRANCE SAS) 29 December 2022 (2022-12-29)<br>entire document | 1-15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **11 March 2024** | **14 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/138206**

| Patent document cited in search report | | | Publication date (day/month/year) | Patent family member(s) | | | Publication date (day/month/year) |
|---|---|---|---|---|---|---|---|
| CN | 116980611 | A | 31 October 2023 | None | | | |
| CN | 114663536 | A | 24 June 2022 | None | | | |
| CN | 113574883 | A | 29 October 2021 | US | 2020304802 | A1 | 24 September 2020 |
| | | | | US | 11729406 | B2 | 15 August 2023 |
| | | | | EP | 3942808 | A1 | 26 January 2022 |
| | | | | US | 2023336754 | A1 | 19 October 2023 |
| | | | | WO | 2020191402 | A1 | 24 September 2020 |
| WO | 2022268641 | A1 | 29 December 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101368433